(19) Europäisches Patentamt
European Patent Office
Office européen des brevets

(11) **EP 2 950 189 A1**

(12) **EUROPEAN PATENT APPLICATION**
published in accordance with Art. 153(4) EPC

(43) Date of publication:
**02.12.2015 Bulletin 2015/49**

(21) Application number: **14759658.9**

(22) Date of filing: **14.01.2014**

(51) Int Cl.:
*G06F 3/042* (2006.01)          *G02B 6/122* (2006.01)
*G02B 26/02* (2006.01)

(86) International application number:
**PCT/JP2014/050401**

(87) International publication number:
**WO 2014/136472 (12.09.2014 Gazette 2014/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.03.2013   JP 2013044072**
**19.04.2013   JP 2013087944**

(71) Applicant: **Nitto Denko Corporation**
**Ibaraki-shi, Osaka 567-8680 (JP)**

(72) Inventors:
• **SHIMIZU Yusuke**
**Ibaraki-shi**
**Osaka 567-8680 (JP)**
• **YOSHIOKA Ryoma**
**Ibaraki-shi**
**Osaka 567-8680 (JP)**

(74) Representative: **Hoffmann Eitle**
**Patent- und Rechtsanwälte PartmbB**
**Arabellastraße 30**
**81925 München (DE)**

(54) **POSITION SENSOR**

(57)     There is provided a position sensor configured not to sense positions pressed with unwanted portions such as the little finger of a hand and the base thereof which holds an input element such as a pen when information such as a character is inputted with the input element. The position sensor A includes: a sheet-form optical waveguide W including an under cladding layer 1, linear cores 2 arranged in a lattice on the under cladding layer 1, and an over cladding layer 3 formed to cover the cores 2; a light-emitting element 4 connected to one end surface of the cores 2; and a light-receiving element 5 connected to the other end surface of the cores 2. A refractive index difference between the cores 2 and the under cladding layer 1 and a refractive index difference between the cores 2 and the over cladding layer 3 are set in a specific range. The cores 2 have an elasticity modulus higher than those of the under and over cladding layers 1 and 3. The deformation rate of a cross section of the cores 2 as seen in a pressed direction is lower than the deformation rates of cross sections of the over cladding layer 3 and the under cladding layer 1 when a surface of the optical waveguide W is pressed.

FIG. 1A

FIG. 1B

**Description**

TECHNICAL FIELD

The present invention relates to a position sensor for optically sensing a pressed position.

BACKGROUND ART

A position sensor for optically sensing a pressed position has been hitherto proposed (see PTL 1, for example). This position sensor is configured such that a plurality of cores serving as optical paths are arranged in two directions perpendicular to each other and such that a cladding covers peripheral edge portions of the cores to provide a sheet form. The position sensor is also configured such that light from a light-emitting element is incident on one end surface of the cores and such that the light passing through the cores is received by a light-receiving element at the other end surface of the cores. When part of the surface of the position sensor in the sheet form is pressed with a finger and the like, some of the cores corresponding to the pressed part are crushed (decreased in cross-sectional area as seen in the pressed direction). The level of light received by the light-receiving element is decreased in the cores corresponding to the pressed part, so that the aforementioned pressed position is sensed.

An input device having a pressure-sensitive touch panel and a display has been proposed as an input device for inputting characters and the like (see PTL 2, for example). This input device is configured such that, when a character or the like is inputted onto the aforementioned pressure-sensitive touch panel with a pen, the pressure-sensitive touch panel senses the position pressed with the tip of the pen to output the pressed position to the aforementioned display, so that the inputted character or the like appears on the display.

RELATED ART DOCUMENT

PATENT DOCUMENT

PTL 1: JP-A-HEI8(1996)-234895
PTL 2: JP-A-2006-172230

SUMMARY OF INVENTION

In general, when a person writes a character or the like on a paper sheet with a writing implement such as a pen, the little finger of his/her hand which holds the writing implement, the base thereof (hypothenar) and the like also come into contact with the surface of the paper sheet.

Thus, when a character or the like is inputted onto the surface of the position sensor in the sheet form as disclosed in PTL 1 described above with a writing implement such as a pen, not only the tip of the pen but also the little finger of the hand which holds the writing implement, the base thereof and the like press the position sensor in the sheet form. As a result, not only the inputted character or the like but also the unwanted positions of the little finger and the base thereof are sensed.

Likewise, when a character or the like is inputted to the input device disclosed in PTL 2 described above, the pressure-sensitive touch panel senses not only the position pressed with the tip of the pen but also the position pressed with the little finger of the hand which holds the writing implement, the base thereof and the like. As a result, not only the inputted character or the like but also the unwanted positions of the little finger and the base thereof appear on the display.

In view of the foregoing, it is therefore an obj ect of the present invention to provide a position sensor configured such that the positions pressed with the unwanted parts such as the little finger of a hand which holds an input element such as a pen and the base of the little finger are not sensed when information such as a character is inputted to the position sensor with the input element.

To accomplish the aforementioned object, a position sensor in a sheet form according to the present invention comprises : an optical waveguide in a sheet form including an under cladding layer in a sheet form, a plurality of linear cores arranged in a lattice form and formed on a surface of the under cladding layer, and an over cladding layer in a sheet form formed to cover the cores; a light-emitting element connected to one end surface of the cores; and a light-receiving element connected to the other end surface of the cores, the position sensor specifying a pressed position, based on a change in the amount of light propagating in the cores, when a surface of the position sensor is pressed at any position, wherein the position sensor is pressed with a tip input part of an input element, the tip input part having a radius of curvature R (in $\mu$m), wherein, using the ratio A (= R/T) between the radius of curvature R and the thickness T (in $\mu$m) of the cores, a refractive index difference between the cores and the under cladding layer and a refractive index difference between the cores and the over cladding layer are set to values ranging between a maximum value $\Delta$max expressed by Equation (1) below and a minimum value $\Delta$min expressed by Equation (2) below, wherein the cores have an elasticity modulus higher than that of the under cladding layer and that of the over cladding layer, and wherein the deformation rate of a cross section of the cores as seen in a pressed direction is lower than the deformation rates of cross sections of the over cladding layer and the under cladding layer when a surface of the optical waveguide in the sheet form is pressed.

[MATH. 1]

$$\Delta\text{max} = 8.0 \times 10^{-2} - A \times (5.0 \times 10^{-4}) \qquad (1)$$

[MATH. 2]

$$\Delta\text{min} = 1.1 \times 10^{-2} - A \times (1.0 \times 10^{-4}) \qquad (2)$$

The term "deformation rate" as used in the present invention refers to the proportion of the amount of change in the thickness of the cores, the over cladding layer and the under cladding layer as seen in the pressed direction during the pressing to the thickness thereof before the pressing.

The present inventors have made studies about the propagation of light in linear cores to prevent a position pressed with a part of a hand holding an input element such as a pen from being sensed when information such as a character is inputted with the input element onto a surface of a position sensor including an optical waveguide in a sheet form including the linear cores arranged in a lattice form. In the course of the studies, the present inventors have hit upon the idea of preventing the cores from being crushed (holding the cross-sectional area of the cores) by the pressure of a tip input part (such as a pen tip) of an input element or the hand holding the pen, rather than causing the cores to be crushed (to decrease in cross-sectional area) by the aforementioned pressure as in the conventional technique. Thus, the elasticity modulus of the cores was made higher than that of the under cladding layer and that of the over cladding layer. Then, the over cladding layer and the under cladding layer both in the part pressed with the tip input part of the input element and in the part pressed with the hand were deformed so as to be crushed as seen in the pressed direction, whereas the cores were bent along the parts of the tip input part of the input element and the hand so as to sink in the under cladding layer while holding the cross-sectional area thereof. The bend in the cores was a sharp bend in the part pressed with the tip input part of the input element, and the bend in the cores was a gentle bend in the part pressed with the hand. As a result, it has been found that light leakage (scattering) from the cores occurs in the cores in the part pressed with the tip input part of the input element because of the sharp bend of the cores, but the aforementioned light leakage (scattering) does not occur in the cores in the part pressed with the hand because of the gentle bend of the cores. That is, the level of light received (the amount of light received) by the light-receiving element is decreased in the cores in the part pressed with the tip input part of the input element, but is not decreased in the cores in the part pressed with the hand. The present inventors have found that the position of the tip input part of the input element is sensed based on the decrease in the level of received light, and the part pressed with the hand in which the level of received light does not decrease is in the same state as an unpressed part and is not sensed.

The present inventors have made further studies about the light leakage (scattering) from the cores which is caused by the pressing with the tip input part of the input element for the purpose of increasing the accuracy of sensing of the position of the tip input part of the input element. In the course of the studies, the present inventors have found out that the aforementioned light leakage (scattering) is dependent on the refractive index difference between the cores and the under cladding layer and a refractive index difference between the cores and the over cladding layer, and that the refractive index differences are dependent on the radius of curvature R of the tip input part of the input element and the thickness T of the cores. As a result of much trial and error, the present inventors have found that setting the refractive index differences to values ranging between the maximum value $\Delta$max expressed by Equation (1) above and the minimum value $\Delta$min expressed by Equation (2) above increases the accuracy of sensing of the position of the tip input part of the input element. Hence, the present inventors have attained the present invention.

In the position sensor according to the present invention, the elasticity modulus of the cores is higher than that of the under cladding layer and that of the over cladding layer. Accordingly, when the surface of the over cladding layer of the optical waveguide is pressed, the deformation rate of the cross section of the cores as seen in the pressed direction is lower than the deformation rates of the cross sections of the over cladding layer and the under cladding layer. The cross-sectional area of the cores as seen in the pressed direction is held. When information such as a character is inputted onto the surface of the position sensor with an input element such as a pen, the bend in the cores is sharp along the tip input part of the input element in the part pressed with the tip input part such as a pen tip to cause light leakage (scattering) from the cores, whereas the bend in the cores is gentle along the hand in the part pressed with the hand holding the input element to prevent the occurrence of the aforementioned light leakage (scattering). Thus, the level of light detected by the light-receiving element is decreased in the cores pressed with the tip input part such as a pen tip, but is prevented from decreasing in the cores pressed with the hand holding the input element. The position of the tip input part such as a pen tip is sensed based on the decrease in the level of received light, and the part pressed with the hand in which the level of received light does not decrease is in the same state as an unpressed part and is not sensed.

Further, the refractive index difference between the cores and the under cladding layer and the refractive index difference between the cores and the over cladding layer in the position sensor according to the present invention are set to values ranging between the maximum value ∆max expressed by Equation (1) above and the minimum value ∆min expressed by Equation (2) above. This makes proper the decrease in the level of received light [the light leakage (scattering) from the cores] which is caused by the pressing with the tip input part of the input element, to thereby increase the accuracy of sensing of the position of the tip input part of the input element.

BRIEF DESCRIPTION OF DRAWINGS

[FIG. 1] FIG. 1A is a plan view schematically showing one embodiment of a position sensor according to the present invention, and FIG. 1B is an enlarged sectional view thereof.
[FIG. 2] FIG. 2A is a sectional view schematically showing the position sensor pressed with an input element, and FIG. 2B is a sectional view schematically showing the position sensor pressed with a hand.

DESCRIPTION OF EMBODIMENTS

Next, an embodiment according to the present invention will now be described in detail with reference to the drawings.

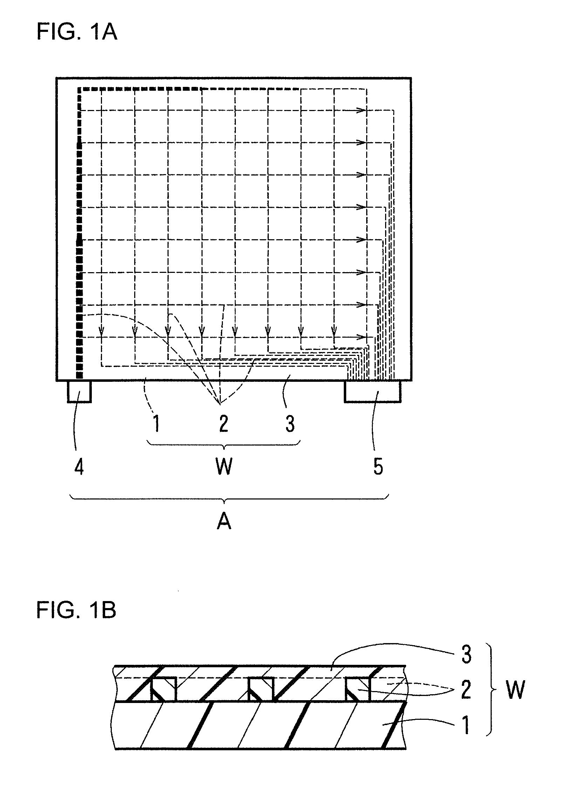

FIG. 1A is a plan view showing one embodiment of a position sensor according to the present invention. FIG. 1B is a sectional view, on an enlarged scale, of a middle portion of the position sensor. The position sensor A of this embodiment includes: an optical waveguide W in a rectangular sheet form configured such that linear cores 2 arranged in a lattice form are held between an under cladding layer 1 and an over cladding layer 3 both in a rectangular sheet form; a light-emitting element 4 connected to one end surface of the linear cores 2 arranged in the lattice form; and a light-receiving element 5 connected to the other end surface of the linear cores 2. Light emitted from the light-emitting element 4 passes through the cores 2 and is received by the light-receiving element 5. The cores 2 have an elasticity modulus higher than the elasticity modulus of the under cladding layer 1 and the elasticity modulus of the over cladding layer 3. Accordingly, when the surface of the optical waveguide W in the rectangular sheet form is pressed, the deformation rate of the cross section of the cores 2 as seen in the pressed direction is lower than the deformation rates of the cross sections of the over cladding layer 3 and the under cladding layer 1. In FIG. 1A, the cores 2 are indicated by broken lines, and the thickness of the broken lines indicates the thickness of the cores 2. Also, in FIG. 1A, the number of cores 2 are shown as abbreviated. Arrows in FIG. 1A indicate the directions in which light travels.

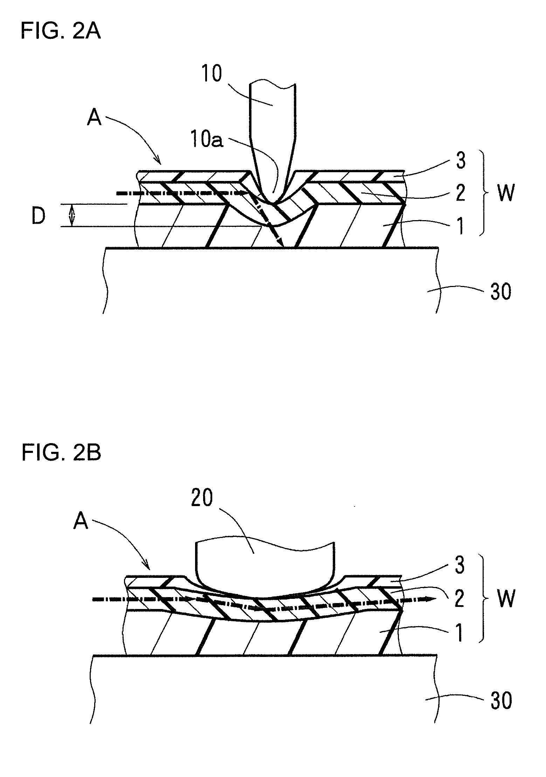

As shown in sectional views in FIGS. 2A and 2B, when the position sensor A is placed on a flat base 30 such as a table and information such as a character is inputted, for example, by writing into a region of the surface of the position sensor A which corresponds to the cores 2 in the lattice form with an input element 10 such as a pen held in a hand 20, part of the position sensor A which is pressed with a tip input part 10a such as a pen tip (with reference to FIG. 2A) and part of the position sensor A which is pressed with the little finger of the hand 20 or the base thereof (hypothenar) (with reference to FIG. 2B) are deformed in cross sections as seen in the pressed direction in such a manner that the over cladding layer 3 and the under cladding layer 1 which have a lower elasticity modulus are crushed, and that the cores 2 having a higher elasticity modulus are bent along the parts of the tip input part 10a and the hand 20 so as to sink in the under cladding layer 1 while holding the cross-sectional area thereof.

In the part pressed with the tip input part 10a, the cores 2 are bent sharply, as shown in FIG. 2A, because the tip input part 10a is sharp-pointed, so that light leakage (scattering) from the cores 2 occurs (with reference to dash-double-dot arrows in FIG. 2A). In the part pressed with the hand 20 holding the input element 10, whereas, the cores 2 are bent gently, as shown in FIG. 2B, because the hand 20 is considerably larger and rounder than the tip input part 10a, so that the aforementioned light leakage (scattering) does not occur (light travels in the cores 2 without leaking from the cores 2) (with reference to dash-double-dot arrows in FIG. 2B). Thus, the level of light received by the light-receiving element 5 is decreased in the cores 2 pressed with the tip input part 10a, but is prevented from decreasing in the cores 2 pressed with the hand 20 holding the input element 10. The position (coordinates) of the tip input part 10a is sensed based on the decrease in the level of received light. The part pressed with the hand 20 in which the level of received light does not decrease is in the same state as an unpressed part, and is not sensed.

In the position sensor A, a refractive index difference between the cores 2 and the under cladding layer 1 and a refractive index difference between the cores 2 and the over cladding layer 3 are set to values ranging between a maximum value Δmax expressed by Equation (1) below and a minimum value Δmin expressed by Equation (2) below. This increases the accuracy of sensing of the position of the tip input part 10a. In Equations (1) and (2) below, A denotes the ratio (R/T) between the radius of curvature R (in $\mu$m) of the tip input part 10a such as a pen tip and the thickness T (in $\mu$m) of the cores 2.

[MATH. 3]

$$\Delta\text{max} = 8.0 \times 10^{-2} - A \times (5.0 \times 10^{-4}) \qquad (1)$$

[MATH. 4]

$$\Delta\text{min} = 1.1 \times 10^{-2} - A \times (1.0 \times 10^{-4}) \qquad (2)$$

When the refractive index differences are greater than the maximum value Δmax, the amount of light leakage (scattering) is small even if the surface of the position sensor A is pressed with the tip input part 10a, so that the level of light received by the light-receiving element 5 is not sufficiently decreased. Thus, a distinction between the position of the tip input part 10a and the position of the hand 20 cannot be made with high accuracy. On the other hand, when the refractive index differences are less than the minimum value Δmin, the light leakage (scattering) occurs also in the part pressed with the hand 20. Thus, a distinction between the position of the tip input part 10a and the position of the hand 20 cannot be made with high accuracy.

For example, the refractive index differences are in the range of $1.0 \times 10^{-3}$ to $7.95 \times 10^{-2}$, when the radius of curvature R (in $\mu$m) of the tip input part 10a is in the range of 100 to 1000, the thickness T (in $\mu$m) of the cores 2 is in the range of 10 to 100, and the ratio A is in the range of 1 to 100. When the ratio A is greater than 100, the minimum value Δmin shall be $1.0 \times 10^{-3}$ (constant).

The position of the tip input part 10a sensed by the position sensor A and the movement locus (a character, a figure and the like) of the tip input part 10a which is produced by the successive positions thereof are stored, for example, as electronic data in a storage means such as a memory or sent to a display to appear on the display.

It is only necessary for the input element 10 to be able to press the surface of the position sensor A in the aforementioned manner. The input element 10 is not limited to the writing implement capable of writing on a paper sheet with ink and the like but may be a mere rod or stick incapable of writing on a paper sheet with ink and the like. When the aforementioned pressing is released (the tip input part 10a is moved away or the input such as writing is completed), the under cladding layer 1, the cores 2 and the over cladding layer 3 return to their original states (with reference to FIG. 1B) because of their resilience. It is preferable that the sinking depth D of the cores 2 in the under cladding layer 1 is a maximum of 2000 $\mu$m. When the sinking depth D exceeds 2000 $\mu$m, there are dangers that the under cladding layer 1, the cores 2 and the over cladding layer 3 do not return to their original states and that cracking occurs in the optical waveguide W.

The elasticity moduli and the like of the cores 2, the under cladding layer 1 and the over cladding layer 3 will be described in further detail.

The elasticity modulus of the cores 2 is preferably in the range of 1 to 10 GPa, and more preferably in the range of 2 to 5 GPa. When the elasticity modulus of the cores 2 is less than 1 GPa, there are cases in which the cross-sectional area of the cores 2 cannot be held (the cores 2 are crushed) because of the pressure of the tip input part 10a, depending on the shape of the tip input part 10a such as a pen tip. In such cases, there is a danger that the position of the tip input part 10a is not properly sensed. Whereas, when the elasticity modulus of the cores 2 is greater than 10 GPa, there are cases in which the bend in the cores 2 because of the pressure of the tip input part 10a becomes a gentle bend, rather than a sharp bend along the tip input part 10a. This causes no light leakage (scattering) from the cores 2, so that the level of light received by the light-receiving element 5 is not decreased. In such cases, there is a danger that the position of the tip input part 10a is not properly sensed. The cores 2 have the following dimensions: a thickness in the range of 5 to 100 $\mu$m, and a width in the range of 5 to 500 $\mu$m, for example.

The elasticity modulus of the over cladding layer 3 is preferably in the range of 0.1 MPa to less than 10 GPa, and more preferably in the range of 1 MPa to less than 5 GPa. When the elasticity modulus of the over cladding layer 3 is less than 0.1 MPa, there are cases in which the over cladding layer 3 is so soft as to be damaged by the pressure of the tip input part 10a, depending on the shape of the tip input part 10a such as a pen tip. In such cases, it is impossible for the over cladding layer 3 to protect the cores 2. Whereas, when the elasticity modulus of the over cladding layer 3 is not less than 10 GPa, the over cladding layer 3 is not deformed by the pressures of the tip input part 10a and the hand 20 in such a manner as to be crushed but the cores 2 are crushed, resulting in a danger that the position of the tip input part 10a is not properly sensed. The over cladding layer 3 has a thickness in the range of 1 to 200 μm, for example.

The elasticity modulus of the under cladding layer 1 is preferably in the range of 0.1 MPa to 1 GPa, and more preferably in the range of 1 to 100 MPa. When the elasticity modulus of the under cladding layer 1 is less than 0.1 MPa, there are cases in which the under cladding layer 1 is too soft to return to its original state after being pressed with the tip input part 10a such as a pen tip, so that the pressing cannot be continuously performed. Whereas, when the elasticity modulus of the under cladding layer 1 is greater than 1 GPa, the under cladding layer 1 is not deformed by the pressures of the tip input part 10a and the hand 20 in such a manner as to be crushed but the cores 2 are crushed, resulting in a danger that the position of the tip input part 10a is not properly sensed. The under cladding layer 1 has a thickness in the range of 20 to 2000 μm, for example.

Examples of the materials for the formation of the cores 2, the under cladding layer 1 and the over cladding layer 3 include photosensitive resins and thermosetting resins. The optical waveguide W may be produced by a manufacturing method depending on the materials. The cores 2 have a refractive index higher than the refractive indices of the under cladding layer 1 and the over cladding layer 3. The adjustment of the elasticity moduli and the refractive indices may be made, for example, by adjusting the selection of the types of the materials for the formation of the cores 2, the under cladding layer 1 and the over cladding layer 3, and the composition ratio thereof. A rubber sheet may be used as the under cladding layer 1, and the cores 2 may be formed in a lattice form on the rubber sheet.

Also, an elastic layer such as a rubber layer may be provided on the back surface of the under cladding layer 1. In this case, when the resilience of the under cladding layer 1, the cores 2 and the over cladding layer 3 is weakened or when the under cladding layer 1, the cores 2 and the over cladding layer 3 are originally made of materials having weak resilience, the elastic force of the elastic layer may be used to assist the weak resilience, thereby allowing the under cladding layer 1, the cores 2 and the over cladding layer 3 to return to their original states after the pressing with the tip input part 10a of the input element 10 is released.

Next, an inventive example of the present invention will be described in conjunction with a comparative example. It should be noted that the present invention is not limited to the inventive example.

EXAMPLES

[Material for Formation of Over Cladding Layer]

Component A: 30 parts by weight of an epoxy resin (EPOGOSEY PT available from Yokkaichi Chemical Company Limited).
Component B: 70 parts by weight of an epoxy resin (EHPE3150 available from Daicel Corporation).
Component C: 4 parts by weight of a photo-acid generator (CPI-200K available from San-Apro Ltd.).
Component D: 100 parts by weight of ethyl lactate (available from Wako Pure Chemical Industries, Ltd.).

A material for the formation of an over cladding layer was prepared by mixing these components A to D together.

[Material for Formation of Cores]

Component E: 80 parts by weight of an epoxy resin (EHPE3150 available from Daicel Corporation).
Component F: 20 parts by weight of an epoxy resin (YDCN-700-10 available from Nippon Steel & Sumikin Chemical Co., Ltd.).
Component G: 1 part by weight of a photo-acid generator (SP170 available from ADEKA Corporation).
Component H: 50 parts by weight of ethyl lactate (available from Wako Pure Chemical Industries, Ltd.).

A material for the formation of cores was prepared by mixing these components E to H together.

[Material for Formation of Under Cladding Layer]

Component I: 75 parts by weight of an epoxy resin (EPOGOSEY PT available from Yokkaichi Chemical Company Limited).

Component J: 25 parts by weight of an epoxy resin (JER1007 available from Mitsubishi Chemical Corporation).

Component K: 4 parts by weight of a photo-acid generator (CPI-200K available from San-Apro Ltd.).

Component L: 50 parts by weight of ethyl lactate (available from Wako Pure Chemical Industries, Ltd.).

A material for the formation of an under cladding layer was prepared by mixing these components I to L together.

[Production of Optical Waveguide]

The over cladding layer was formed on a surface of a base material made of glass by a spin coating method with the use of the aforementioned material for the formation of the over cladding layer. The over cladding layer had a thickness of 5 $\mu$m, an elasticity modulus of 1.2 GPa, and a refractive index of 1.503.

Next, the cores were formed on a surface of the over cladding layer by a photolithographic method with the use of the aforementioned material for the formation of the cores. The cores had a thickness of 30 $\mu$m, a width of 100 $\mu$m in a portion of a lattice form, a pitch of 600 $\mu$m, an elasticity modulus of 3 GPa, and a refractive index of 1.523.

Next, the under cladding layer was formed on the surface of the over cladding layer by a spin coating method with the use of the aforementioned material for the formation of the under cladding layer so as to cover the cores. The under cladding layer had a thickness of 200 $\mu$m (as measured from the surface of the over cladding layer), an elasticity modulus of 3 MPa, and a refractive index of 1.503.

Then, a substrate made of PET (having a thickness of 1 mm) with a double-sided adhesive tape (having a thickness of 25 $\mu$m) affixed to one surface thereof was prepared. Next, the other adhesive surface of the double-sided adhesive tape was affixed to a surface of the under cladding layer. In that state, the over cladding layer was stripped from the base material made of glass.

[Comparative Example]

[Material for Formation of Over Cladding Layer]

Component M: 40 parts by weight of an epoxy resin (EPOGOSEY PT available from Yokkaichi Chemical Company Limited).

Component N: 60 parts by weight of an epoxy resin (2021P available from Daicel Corporation).

Component O: 4 parts by weight of a photo-acid generator (SP170 available from ADEKA Corporation).

A material for the formation of an over cladding layer was prepared by mixing these components M to O together.

[Material for Formation of Cores]

Component P: 30 parts by weight of an epoxy resin (EPOGOSEY PT available from Yokkaichi Chemical Company Limited).

Component Q: 70 parts by weight of an epoxy resin (EXA-4816 available from DIC Corporation).

Component R: 4 parts by weight of a photo-acid generator (SP170 available from ADEKA Corporation).

A material for the formation of cores was prepared by mixing these components P to R together.

[Material for Formation of Under Cladding Layer]

Component S: 40 parts by weight of an epoxy resin (EPOGOSEY PT available from Yokkaichi Chemical Company Limited).

Component T: 60 parts by weight of an epoxy resin (2021P available from Daicel Corporation).

Component U: 4 parts by weight of a photo-acid generator (SP170 available from ADEKA Corporation).

A material for the formation of an under cladding layer was prepared by mixing these components S to U together.

[Production of Optical Waveguide]

An optical waveguide having the same dimensions was produced in the same manner as in Inventive Example. However, the over cladding layer had an elasticity modulus of 1 GPa, the cores had an elasticity modulus of 25 MPa, and the under cladding layer had an elasticity modulus of 1 GPa. Also, the over cladding layer had a refractive index of 1.504, the cores had a refractive index of 1.532, and the under cladding layer had a refractive index of 1.504.

[Production of Position Sensor]

A light-emitting element (XH85-S0603-2s available from Optowell Co., Ltd.) was connected to one end surface of the cores of each of the optical waveguides in Inventive and Comparative Examples, and a light-receiving element (s10226 available from Hamamatsu Photonics K. K.) was connected to the other end surface of the cores thereof. Thus, a position sensor in each of Inventive and Comparative Examples was produced.

[Evaluation of Position Sensor]

A surface of each position sensor was pressed with a pen tip (having a radius of curvature of 350 $\mu$m) of a ballpoint pen with a load of 1.47 N, and pressed with a forefinger (having a radius of curvature of 1 cm) of a person with a load of 19. 6 N. Then, the levels of light received (the amounts of light received) by the light-receiving element were measured with and without the application of the aforementioned loads. The attenuation rates of the levels of detected light were calculated in accordance with Equation (3) below.

[MATH. 5]

$$\text{attenuation rate (\%)} = \frac{\text{amount of light with application of load (mA)}}{\text{amount of light without application of load (mA)}} \times 100 \qquad (3)$$

As a result, the attenuation rate was 80% when the surface of the position sensor in Inventive Example was pressed with the pen tip, and the attenuation rate was 0% when the surface of the position sensor in Inventive Example was pressed with the forefinger. Whereas, the attenuation rate was 60% when the surface of the position sensor in Comparative Example was pressed with the pen tip, and the attenuation rate was 50% when the surface of the position sensor in Comparative Example was pressed with the forefinger.

In the position sensor in Inventive Example, the level of light received by the light-receiving element is decreased when the surface of the position sensor is pressed with the pen tip but is not decreased when the surface of the position sensor is pressed with the forefinger. For this reason, it is found that, in the position sensor in Inventive Example, only the position of the pen tip is sensed but the position of the forefinger is not sensed as in an unpressed state. In the position sensor in Comparative Example, whereas, the levels of light received by the light-receiving element are decreased to the same extent when the surface of the position sensor is pressed with the pen tip and when the surface of the position sensor is pressed with the forefinger. Thus, it is found that, in the position sensor in Comparative Example, not only the position of the pen tip but also the unwanted position of the forefinger are sensed.

Both Inventive Example and Comparative Example have the ratio A (= R/T) of 11.7 because the pen tip of the ballpoint pen has a radius of curvature R of 350 $\mu$m and the cores have a thickness T of 30 $\mu$m as described above. In both Inventive Example and Comparative Example, the maximum value $\Delta$max of the refractive index difference between the cores and the under cladding layer and the refractive index difference between the cores and the over cladding layer is $7.4 \times 10^{-2}$ from Equation (1) above, and the minimum value $\Delta$min thereof is $9.8 \times 10^{-3}$ from Equation (2) above. That is, both the refractive index differences (= 0.020) in Inventive Example and the refractive index differences (= 0.028) in Comparative Example are set to values ranging between the maximum value $\Delta$max and the minimum value $\Delta$min.

Although specific forms in the present invention have been described in the aforementioned example, the aforementioned example should be considered as merely illustrative and not restrictive. It is contemplated that various modifications evident to those skilled in the art could be made without departing from the scope of the present invention.

The position sensor according to the present invention may be used such that only the position or movement locus of a tip input part such as a pen tip, which is necessary, is sensed but the position or the like of a hand, which is unwanted, is not sensed when a person inputs a character and the like while holding an input element such as a pen in his/her hand.

REFERENCE SIGNS LIST

A  Position sensor
W  Optical waveguide
1  Under cladding layer
2  Cores
3  Over cladding layer
4  Light-emitting element
5  Light-receiving element

**Claims**

1. A position sensor in a sheet form comprising:

an optical waveguide in a sheet form including an under cladding layer in a sheet form, a plurality of linear cores arranged in a lattice form and formed on a surface of the under cladding layer, and an over cladding layer in a sheet form formed to cover the cores;
a light-emitting element connected to one end surface of the cores; and
a light-receiving element connected to the other end surface of the cores,
wherein a pressed position is specified, based on a change in the amount of light propagating in the cores, when a surface of the position sensor is pressed at any position,
wherein the position sensor is pressed with a tip input part of an input element, the tip input part having a radius of curvature R in $\mu$m,
wherein, using the ratio A of the radius of curvature R to the thickness T in $\mu$m of the cores, a refractive index difference between the cores and the under cladding layer and a refractive index difference between the cores and the over cladding layer are set to values ranging between a maximum value $\Delta$max expressed by Equation (1) below and a minimum value $\Delta$min expressed by Equation (2) below,
wherein the cores have an elasticity modulus higher than that of the under cladding layer and that of the over cladding layer, and
wherein the deformation rate of a cross section of the cores as seen in a pressed direction is lower than the deformation rates of cross sections of the over cladding layer and the under cladding layer when a surface of the optical waveguide in the sheet form is pressed.

[MATH. 1]

$$\Delta\text{max} = 8.0 \times 10^{-2} - A \times (5.0 \times 10^{-4}) \qquad (1)$$

[MATH. 2]

$$\Delta\text{min} = 1.1 \times 10^{-2} - A \times (1.0 \times 10^{-4}) \qquad (2)$$

FIG. 1A

FIG. 1B

FIG. 2A

FIG. 2B

## INTERNATIONAL SEARCH REPORT

| | International application No. |
| --- | --- |
| | PCT/JP2014/050401 |

**A. CLASSIFICATION OF SUBJECT MATTER**
*G06F3/042*(2006.01)i, *G02B6/122*(2006.01)i, *G02B26/02*(2006.01)i

According to International Patent Classification (IPC) or to both national classification and IPC

**B. FIELDS SEARCHED**

Minimum documentation searched (classification system followed by classification symbols)
G06F3/042, G02B6/122, G02B26/02

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 01-172916 A  (NOK Corp.),<br>07 July 1989 (07.07.1989),<br>entire text; all drawings<br>(Family: none) | 1 |
| A | JP 2001-222378 A  (NEC Saitama, Ltd.),<br>17 August 2001 (17.08.2001),<br>entire text; all drawings<br>& US 2001/0013861 A1    & EP 1126406 A2<br>& CN 1308352 A | 1 |
| A | JP 10-049285 A  (Hitachi, Ltd.),<br>20 February 1998 (20.02.1998),<br>entire text; all drawings<br>(Family: none) | 1 |

☐ Further documents are listed in the continuation of Box C.       ☐ See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 20 February, 2014 (20.02.14) | 04 March, 2014 (04.03.14) |

| Name and mailing address of the ISA/<br>Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI81996234895 A

- JP 2006172230 A